# EUROPEAN PATENT SPECIFICATION

(11) **EP 1 637 265 B1**
(45) Date of publication and mention of the grant of the patent: **10.01.2018**
(21) Application number: 04736266.0
(22) Date of filing: 07.06.2004
(51) Int. Cl.: B24D 7/06, B24B 1/00, C25F 3/16, C25F 7/00, B23H 5/08

(54) **ROTATION SURFACE-REDUCING HEAD, ELECTROLYTIC SURFACE-REDUCING DEVICE, AND ELECTROLYTIC SURFACE-REDUCING METHOD**
ROTATIONSFLÄCHENREDUZIERKOPF, ELEKTROLYTISCHE FLÄCHENREDUZIERVORRICHTUNG UND ELEKTROLYTISCHES FLÄCHENREDUZIERVERFAHREN
TETE DE REDUCTION DE SURFACE DE ROTATION, DISPOSITIF DE REDUCTION DE SURFACE ELECTROLYTIQUE ET PROCEDE DE REDUCTION DE SURFACE ELECTROLYTIQUE

(30) Priority: 26.06.2003 JP 2003182662
(43) Date of publication of application: 22.03.2006
(73) Proprietor: Tokyo Stainless Grinding Co., Ltd., Tokyo 131-0045 (JP)
(72) Inventor: FUJIWARA, Toshio, Chiba-shi, Chiba 262-0033 (JP); AOYAGI, Taiji, Yachiyo-shi, Chiba 276-0046 (JP); KASAI, Toshio, Yachiyo-shi, Chiba 276-0046 (JP); ARAKAWA, Motohiko, Yachiyo-shi, Chiba 276-0046 (JP); KUSAKABE, Shigeru, Sumida-ku, Tokyo 131-0045 (JP)
(74) Representative: Teipel, Stephan
(86) International application number: PCT/JP2004/008242
(87) International publication number: WO 2005/000512

(56) References cited:
- WO-A1-01/36138
- JP-A- 06 055 347
- JP-A- 50 123 043
- JP-A- 57 144 627
- JP-A- 61 164 720
- JP-A- 62 015 014
- JP-A- 63 127 827
- JP-B- 43 015 037
- JP-U- 64 020 224
- US-A- 4 140 598

## Description

### FIELD OF THE INVENTION

The present invention relates to a rotation surface-reducing head, electrolytic surface-reducing device, and electrolytic surface-reducing method. Such a rotation surface reducing head, electrolytic surface reduction device and electrolytic surface reducing method are known from document WO0136138A1.

### BACKGROUND ART

Generally, steel product such as an H-beam, a column, a square pipe, and a flat bar has on its surface an extremely rough surface (acid pickled surface), a microscopic surface disordered layer, a welding deformation, and the like. It is required to polish the surface of the above-mentioned steel product in order to provide a glossy finish, a hair line finish, and the like for the surface by requirements of building material and the like.

For example, in order to process the steel product for decorative purposes, a surface polishing is performed but a fine measurement is not necessarily required. Namely, in such a surface polishing, a surface luster for removing the acid pickled surface and the microscopic surface disordered layer is often performed while a surge, a trough, and the like that are unavoidable at the time of manufacturing are left remaining.

For processing the surface luster, for example, a grindstone grinding, a mechanical grinding, a full-face nonwoven cloth low-current density electrolytic-polishing (electrolytic-polishing performed under a state of a low current density by using an electrolytic-polishing head fully covered with nonwoven cloth), and the like are used. The full-face nonwoven cloth low-current density electrolytic-polishing is specifically described in the Hitachi Zosen Technical Review Volume 42, No.3, pages 15-22. However, with the full-face nonwoven cloth low-current density electrolytic-polishing, since the current density is low (e.g. 0.05-5 A/cm²), the polishing power is weak and a great surface-reduction' processing cannot be performed, and in addition, the polishing speed is extremely slow, thereby resulting in a substantial cost. On the other hand, if a full-face nonwoven cloth electrolytic-polishing with a polishing head fully covered with nonwoven cloth is performed at a high-current density (e.g. 5-100 A/cm²), there is a problem that hydrogen gas and eluted metal ion are massively generated, so that it is not possible to immediately exclude them to continuously perform the electrolytic-polishing.

### DISCLOSURE OF INVENTION

The present invention provides a rotation surface-reducing head in accordance with claim 1, an electrolytic surface-reducing device in accordance with claim 4, and an electrolytic surface-reducing method in accordance with claim 5 capable of providing a surface-reduction processing of an extremely rough surface (acid pickled surface), a microscopic surface disordered layer, a welding deformation, and the like existing on the surface of steel product such as an H-beam, a column, a square pipe, and a flat bar at a high speed and a low cost.

In addition, the present invention enables, for example, a simultaneous surface-reduction of a concavity and a convexity. Moreover, the present invention enables, for example, a parallel surface-reduction of a plurality of surface-reduced workpieces. In addition, the present invention removes, for example, surface defects on a curved surface, and enables a surface-reduction time to be shortened.

Here, the surface-reduction means to reduce a surface of a surface-reduced workpiece (object to be surface-reduced), and specifically means polishing or grinding. Namely, a rotation surface-reducing head means a polishing head or a grinding head, a surface-reducing device means a polishing device or a grinding device, a surface-reducing method means a polishing method or a grinding method.

Namely, the first aspect of the present invention is a rotation surface-reducing head having a head base and a rotary in accordance with claim 1 whereby two or more electrodes and grindstones are disposed on a bottom surface of the head base. In the rotation surface-reducing head, the head base is disk-like, and the electrodes and the grindstones are disposed in the outer periphery of the bottom surface of the head base, and the rotation surface-reducing head has, in the middle of the bottom surface of the head base, a liquid reservoir defined by the electrodes, the grindstones and the head base. In addition, the electrodes and the grindstones are disposed on the head base so that bottom surfaces of the grindstones project in a lower direction from the electrodes. Moreover, the grindstones are elastic grindstones or include elastic grindstones. In addition, the rotary shaft may be tubular and may be communicated with the liquid reservoir. Moreover, the rotation surface-reducing head may be used in an electrolytic abrasive grain surface-reduction. A further aspect of the present invention is an electrolytic surface-reducing device in accordance with claim 4. A further aspect of the present invention is an electrolytic surface-reducing method in accordance with claim 5. A further aspect of the present invention is an electrolytic surface-reducing method using a rotation surface-reducing head for electrolytic abrasive grain surface-reduction having a head base and a rotary shaft, wherein two or more electrodes and grindstones are disposed on a bottom surface of the head base, characterized by performing a surface-reduction by energizing the electrodes while flowing an electrolyte between the electrodes and a surface-reduced workpiece. A further aspect of the present invention is an electrolytic surface-reducing method using a rotation surface-reducing head for electrolytic abrasive grain surface-reduction having a head base and a rotary shaft, wherein two or more electrodes, grindstones including elestic grindstones enabling a simultaneous surface reduction of a cavity and a convexity on a non-planar workpiece and flexible abrasive grain units are disposed on a bottom surface of the head base, whereby a surface-reduction by energizing the electrodes while flowing an electrolyte between the electrodes and a surface-reduced workpiece is performed. In these electrolytic surface-reducing methods, it is preferable that a current density flowing between the electrodes and the surface-reduced workpiece is 5-100 A/cm². In addition, it is preferable that a velocity of the electrolyte flowing between the electrodes and the surface-reduced workpiece is 5-10 m/sec.

Materials of the head base are not specifically limited, so that the head base made of stainless steel, aluminum, and the like is used. Materials of the electrodes are not specifically limited, so that the electrodes made of stainless steel, aluminum, copper plating, copper, and the like are used. Materials of the grindstones are not specifically limited, so that normal grindstones commercially available to the public may be used. Flexible abrasive grain units are not specifically limited, so that elastic solids with abrasive cloth affixed thereto may be used as the units. In addition, the electrolyte is not specifically limited as long as it is an electrolyte generally used for electrolytic-polishing, so that an aqueous solution of sodium nitrate, an aqueous solution of sodium sulfate, and the like may be used.

In the present invention, a rotation surface-reducing head having two or more electrodes and grindstones abrades a concavity and a convexity of steel product, and the abraded surface is electrolytically surface-reduced, so that a surface-reduction of the entire surface is enabled. In addition, by the present invention, a surface-reducing power is increased and a great surface-reduction processing is enabled, thereby resulting in a surface-reducing speed enhancement, and enabling a surface-reduction of an acid pickled surface, a microscopic surface disordered layer, a welding deformation, and the like on the surface of steel product such as an H-beam, a column, a square pipe, a flat bar, and a steel plate to be performed at a low cost.

In addition, by having the above-mentioned rotation surface-reducing head included the flexible abrasive grain units, a surface-reduction of a curved surface having a trough is enabled at a higher speed and a lower cost.

Moreover, by the present invention, a parallel surface-reduction of a plurality of surface-reduced workpieces is enabled. In addition, by the present invention, a surface defect on a curved surface can be removed, so that a short-time surface-reducing is enabled.

### BRIEF DESCRIPTION OF THE DRAWINGS

FIG. 1A is a perspective view of a rotation surface-reducing head for electrolytic abrasive grain surface-reduction with electrodes and grindstones disposed thereon.
FIG. 1B is a schematic diagram showing a bottom surface of a rotation surface-reducing head for electrolytic abrasive grain surface-reduction with electrodes and grindstones disposed thereon.
FIG. 1C is a cross-section view of FIG. 1B along a line A-A.
FIG. 2A is a perspective view of a rotation surface-reducing head for electrolytic abrasive grain surface-reduction with electrodes, grindstones, and flexible abrasive grain units disposed thereon.
FIG. 2B is a schematic diagram showing a bottom surface of a rotation surface-reducing head for electrolytic abrasive grain surface-reduction with electrodes and grindstones, and flexible abrasive grain units disposed thereon.
FIG. 2C is a cross-section view of FIG. 2B along a line B-B.
FIG. 3 is an overall view showing a surface-reducing device.
FIG. 4 is a schematic diagram showing an effect of an electrode when surface-reducing a surface-reduced workpiece using a rotation surface-reducing head.
FIG. 5 is a schematic diagram showing an effect of a flexible abrasive grain unit when surface-reducing a surface-reduced workpiece using a rotation surface-reducing head.

### BEST MODE FOR CARRYING OUT THE INVENTION

Hereinafter, a rotation surface-reducing head for electrolytic abrasive grain surface-reduction with electrodes and grindstones disposed thereon, a rotation surface-reducing head for electrolytic abrasive grain surface-reduction with electrodes, grindstones, and flexible abrasive grain units disposed thereon, an electrolytic surface-reducing device, and an electrolytic surface-reducing method according to the present invention will be specifically described by using the drawings. However, the present invention is not limited to the description in the best mode for carrying out the invention.

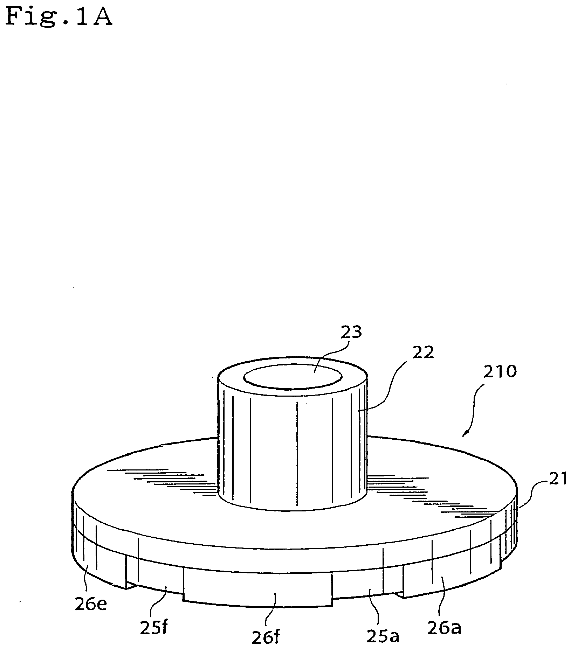

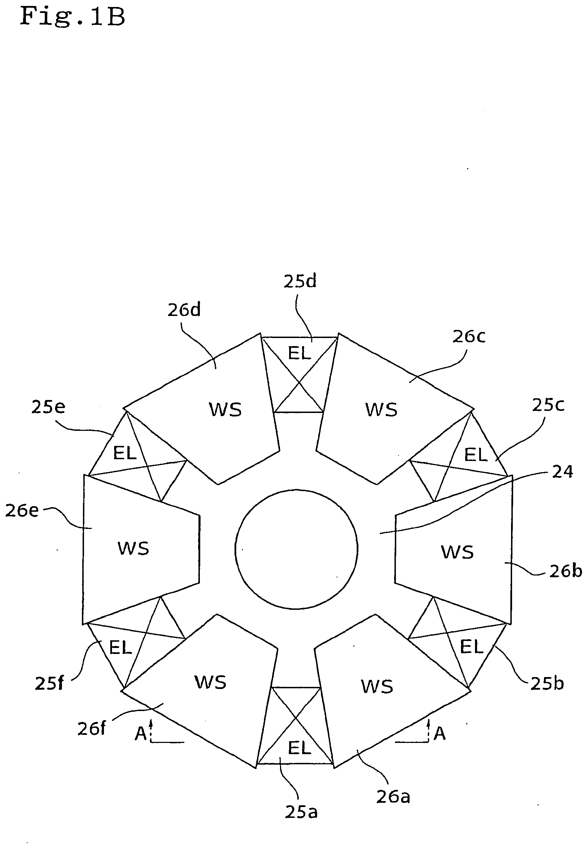

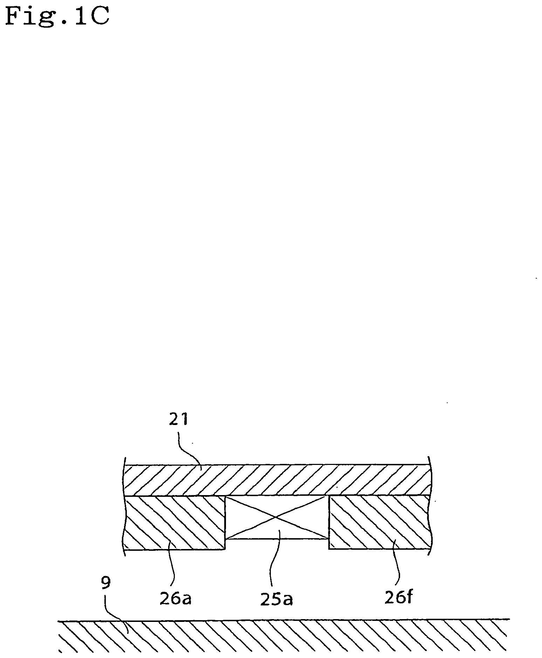

Rotation surface-reducing head for electrolytic abrasive grain surface-reduction with electrodes and grindstones which include elastic grindstones enabling a simultaneous surface reduction of a concavity and a convexity of a non-planar workpiece disposed thereon. Firstly, a rotation surface-reducing head 210 for electrolytic abrasive grain surface-reduction with electrodes and grindstones disposed thereon will be described by using FIG. 1A-FIG. 1C. FIG. 1A is a perspective view of the rotation surface-reducing head 210, FIG. 1B is a schematic diagram showing a bottom surface of the rotation surface-reducing head 210, and FIG. 1C is a cross-section view of FIG. 1B along a line A-A.

In FIG. 1A-FIG. 1C, the surface-reducing head 210 for electrolytic abrasive grain surface-reduction with electrodes and grindstones disposed thereon has a head base 21 and a rotary shaft 22, as well as electrodes 25a-25f and grindstones 26a-26f disposed on the head base. The rotary shaft 22 has a hollow structure and has a tubular portion 23 for passing an electrolyte. In addition, the head base 21 and the rotary shaft 22 are integrated.

As shown in FIG. 1B, the electrode 25 and the grindstone 26 are sequentially disposed along the outer periphery on the head base 21 whose bottom surface is circular, and a concave liquid reservoir 24 is provided at the center section thereof. The liquid reservoir 24 is communicated with the tubular portion 23 so that an electrolyte flowing through the tubular portion 23 flows into the liquid reservoir 24. Normally, a set of the electrode 25 and the grindstone 26 is disposed in this order, so that the set is disposed repeatedly for a plurality of times to cover the entire outer periphery of the head base 21.

FIG. 1C is a cross-section view of FIG. 1B along a line A-A. In FIG. 1C, for the sake of description, an appearance of a surface-reduced workpiece 9 and a rotation surface-reducing head 2 facing each other is shown.

FIG. 1C shows an attached state of the electrode 25 and the grindstone 26 to the head base 21 and a positional relationship between the surface-reduced workpiece. Therefore, the surface-reduced workpiece 9 is shown together in FIG. 1C.

As shown in FIG. 1C, the electrode 25 and the grindstone 26 are disposed so that the bottom surface (surface facing the surface-reduced workpiece 9) of the grindstone 26 is near to the surface-reduced workpiece 9 and the bottom surface of the electrode 25 does not contact the surface-reduced workpiece 9. It is to be noted that this disposal shows a state when the surface-reduction is not performed.

Here, it is preferable that the six electrodes 25a-26f are disposed so that each of them has the same height in order to keep the current density constant during an energization. In addition, it is preferable that the grindstones 26a-26f are disposed so that each of them has the same height in order to keep the accuracy of surface-reduction constant.

Thus, by disposing the grindstone 26 higher than the electrode 25, a predetermined distance can be kept between the electrode 25 and the surface-reduced workpiece (not shown), so that a spark between the electrode and the surface-reduced workpiece (not shown) during the electrolytic surface-reduction can be prevented and a channel for the electrolyte can be secured.

While the electrode 25 used in the present invention is not specifically limited as long as it is one used in electrolytic surface-reduction, e.g. stainless steel and the like can be used. For the grindstone 26 used in the present invention, a normal grindstone commercially available to the public is used. In addition, it is preferable that the grindstone 26 used for the rotation surface-reducing head 210 for electrolytic abrasive grain surface-reduction with electrodes and grindstones disposed thereon is an elastic grindstone.

By using the rotation surface-reducing head 210, specifically a trough of 0.1 mm or less can be efficiently surface-reduced.

Rotation surface-reducing head for electrolytic abrasive grain surface reduction with electrodes, grindstones including elastic grindstones enabling a simultaneous surface reduction of a concavity and a convexity of a non-planer workpiece, and flexible abrasive grain units disposed thereon.

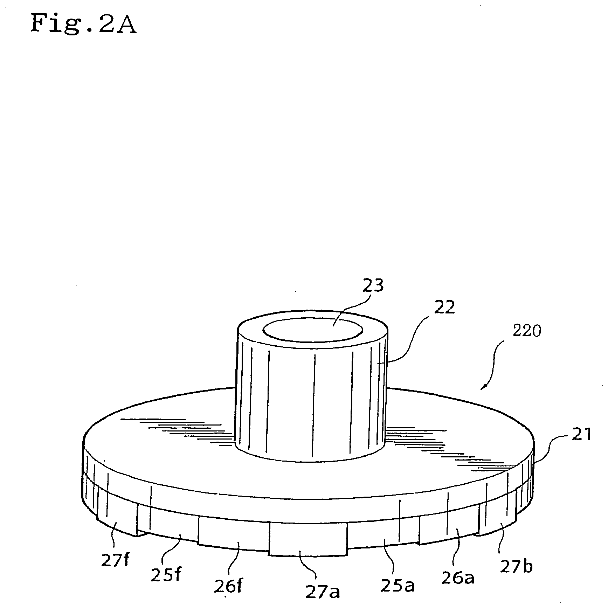

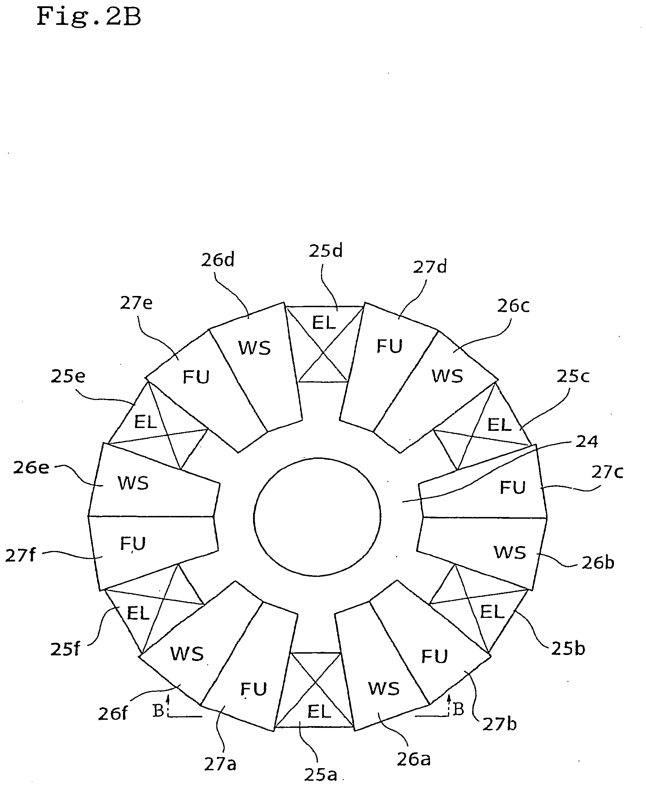

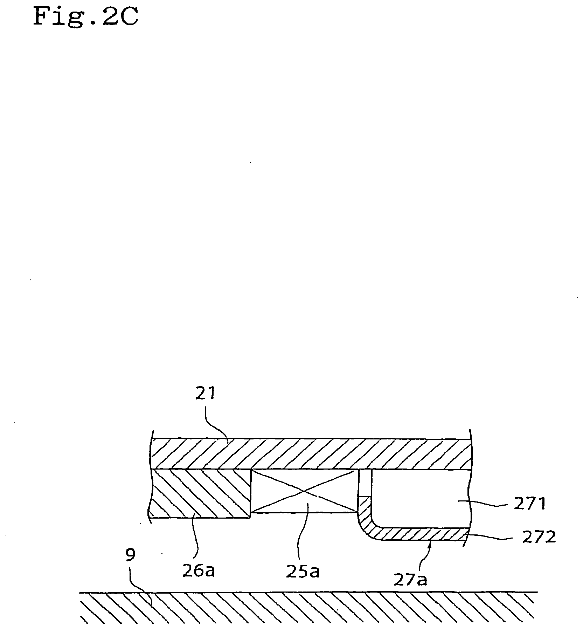

Next, the rotation surface-reducing head 220 for electrolytic abrasive grain surface-reduction with electrodes, grindstones, and flexible abrasive grain units disposed thereon will be described by using FIG. 2A-FIG. 2C. FIG. 2A is a perspective view of the rotation surface-reducing head 220, FIG. 2B is a schematic diagram showing a bottom surface of the rotation surface-reducing head 220, and FIG. 2C is a cross-section view of FIG. 2B along a line B-B.

In FIG. 2A-FIG. 2C, the surface-reducing head 220 has a head base 21 and a rotary shaft 22, as well as electrodes 25a-25f, grindstones 26a-26f, and flexible abrasive units 27a-27f disposed on the head base. The rotary shaft 22 has a hollow structure and has a tubular portion 23 for passing an electrolyte. In addition, the head base 21 and the rotary shaft 22 are integrated.

As shown in FIG. 2B, the electrode 25, the elastic grindstone 26, and the flexible abrasive unit 27 are sequentially disposed along the outer periphery on the head base 21 whose bottom surface is circular, and a concave liquid reservoir 24 is provided at the center section thereof. The liquid reservoir 24 is communicated with the tubular portion 23 so that an electrolyte flowing through the tubular portion 23 flows into the liquid reservoir 24. Normally, a set of the electrode 25, the grindstone 26, and the flexible abrasive unit 27 is disposed in this order, so that the set is disposed repeatedly for a plurality of times to cover the entire outer periphery of the head base 21. It is to be noted that the disposed order of the electrode, the grindstone and the flexible abrasive unit is not limited.

FIG. 2C is a cross-section view of FIG. 2B along a line B-B. In FIG. 2C, for the sake of description, an appearance of a surface-reduced workpiece 9 and a rotation surface-reducing head 220 facing each other is shown.

As with FIG. 1C, FIG. 2C shows an attached state of the electrode 25, the grindstone 26, and the flexible abrasive units 27 to the head base 21 and a positional relationship between the surface-reduced workpiece.

As shown in FIG. 2C, the electrode 25, the grindstone 26, and the flexible abrasive unit 27 are disposed so that the bottom surface (surface facing the surface-reduced workpiece 9) of the flexible abrasive unit 27 is the nearest to the surface-reduced workpiece 9, the bottom surface of the grindstone 26 is subsequently near to the surface-reduced workpiece 9, and the bottom surface of the electrode 25 is the farthest from the surface-reduced workpiece 9. In other words, the electrode 25, the grindstone 26, and the flexible abrasive grain unit 27 are disposed so that the flexible abrasive unit 27, the grindstone 26, and the electrode 25 project in this order in the lower direction (in the direction of the surface-reduced workpiece 9) from the bottom surface (surface facing the surface-reduced workpiece 9) of the head base 21. It is to be noted that this disposal shows a state when the surface-reduction is not performed.

In addition, one of the characteristics of the rotation surface-reducing head 220 is that a flexible abrasive grain unit is used in addition to the electrode and the grindstone as a member composing the surface that performs the electrolytic surface-reduction. The flexible abrasive grain unit used here has elasticity, so that a surface-reduction of a concavity and convexity of a surface, specifically the concavity, can be efficiently performed. Therefore, the flexible abrasive grain unit 27 used in the present invention is a unit having an elastic body 271 such as a foam rubber with a surface-reducing cloth 272 affixed thereto.

Unless specifically mentioned, the head base 21, the rotary shaft 22, the tubular portion 23, the liquid reservoir 24, the electrodes 25a-25f, and the grindstones 26a-2f are the same as the constitution of the rotation surface-reducing head 210 for electrolytic abrasive grain surface-reduction with electrodes and grindstones disposed thereon.

### Electrolytic surface-reducing device and electrolytic surface-reducing method

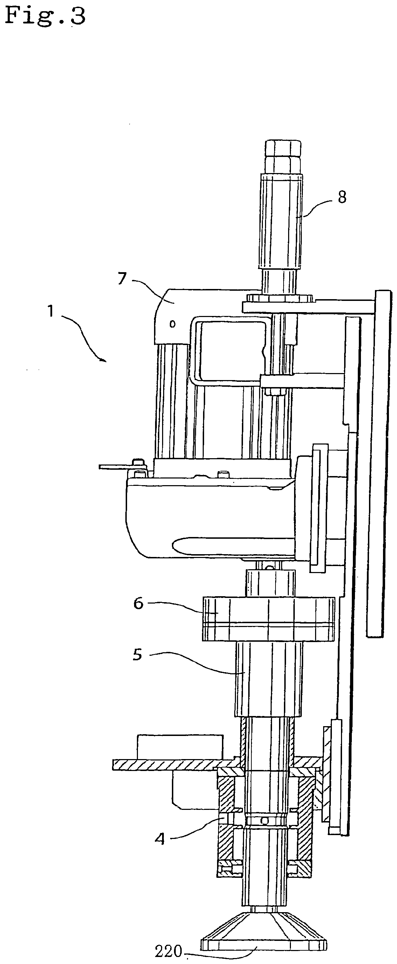

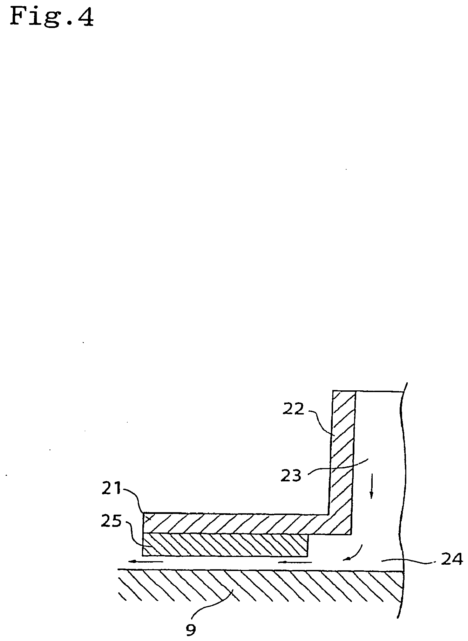

Next, an electrolytic surface-reducing device and an electrolytic surface-reducing method using the rotation surface-reducing head 220 for electrolytic abrasive grain surface-reduction with electrodes, grindstones, and flexible abrasive grain units disposed thereon will be described based on FIG. 3 and FIG. 4.

FIG. 3 is an overall view showing the surface-reducing device 1 of the present invention. As shown in FIG. 4, the surface-reducing device 1 mainly has the rotation surface-reducing head 220, an electrolyte supplying portion 4, an energizing portion 5, an insulation coupling 6, a head rotating motor 7, and an elevating device 8 (going up and down means 8).

The electrolyte supplying portion 4 is a means for applying a predetermined pressure to the electrolyte to supply the rotation surface-reducing head 2 with the electrolyte. Thus, the electrolyte is supplied to the liquid reservoir 24 through the rotary shaft 22 of the rotation surface-reducing head 220 as shown in FIG. 4. As the electrolyte, e.g. an aqueous solution of sodium nitrate, an aqueous solution of sodium sulfate, and the like may be used.

In addition, a potential difference between the electrode 25 of the rotation surface-reducing head 220 and the surface-reduced workpiece 9 is generated by the energizing portion 5, so that a current of a predetermined current density flows in the electrolyte flowing therebetween. The insulation coupling 6 is a means for a current leakage prevention. In addition, the head rotating motor 7 and the rotation surface-reducing head 220 are connected directly or indirectly with each other so that the rotating force of the head rotating motor 7 is passed to the rotation surface-reducing head 220.

The surface-reduced workpiece 9 is placed below the rotation surface-reducing head 220 face-to-face therewith, and the rotation surface-reducing head 220 rotating is pressed against the surface-reduced workpiece 9 by the elevating device 8, so that the surface-reduced workpiece is electrolytically surface-reduced.

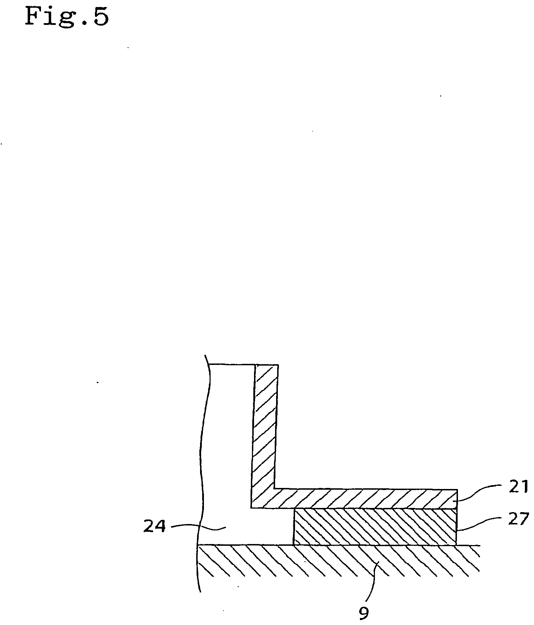

Next, an electrolytic surface-reducing method for the surface-reduced workpiece 9 by the electrolytic surface-reducing device 1 having the rotation surface-reducing head 2 will be described by using FIG. 4 and FIG. 5.

The rotation surface-reducing head 220 rotating is lowered by the elevating device 8, pressed against the surface-reduced workpiece 9 with a predetermined pressure, so that the electrolytic surface-reduction is performed.

As described above, the electrode 25, the grindstone 26, and the flexible abrasive grain unit 27 are provided on the bottom surface of the rotation surface-reducing head 220, and the surface-reduction performed by these three portions.

Hereinafter, the electrolytic surface-reduction will be described separately for the above-mentioned three portions.

### (1) Electrode

FIG. 4 is a part of a sectional view where a plane including a central axis (rotary shaft) and the electrode 25 of the rotation surface-reducing head 220, and is a schematic diagram showing a function of the electrode 25 when the surface-reduced workpiece 9 is surface-reduced by using the rotation surface-reducing head 220.

Arrows shown in FIG. 4 indicate how the electrolyte flows. Namely, the tubular portion 23 and the liquid reservoir 24 are communicated with each other so that the electrolyte supplied from the electrolyte supplying portion 4 of the surface-reducing device 1 to which the rotation surface-reducing head 220 is attached passes through the tubular portion 23 in the rotary shaft 22 and supplied to the convex liquid reservoir 24. The electrolyte supplied to liquid reservoir 24 flows through the gap between the electrode 25 and the surface-reduced workpiece 9 by the pressure applied by the electrolyte supplying portion 4 and the centrifugal force. It is preferable that the above-mentioned flow speed is 5-10 m/sec., or more preferably 6-7 m/sec., so that hydrogen and electrolytic effluent generated from the surfaces of the electrode 25 and the surface-reduced workpiece 9 are immediately excluded.

In addition, by applying a negative pressure to the electrode 25 and a positive pressure to the surface-reduced workpiece 9, a current flows so that the current density in the electrolyte between the electrode 25 and the surface-reduced workpiece 9 assumes 5-100 A/cm². It is more preferable that the above-mentioned current density is 10-40 A/cm². While the hydrogen is generated from the surface of the electrode 25, and the electrolytic eluate are generated from the surface of the surface-reduced workpiece 9, these hydrogen and electrolytic eluate are discharged together with the electrolyte.

### (2) Grindstone

As described above, the grindstone 26 disposed on the head base 21 is disposed so as to be closer to the surface-reduced workpiece 9 than the electrode 25. Here, the grindstone 26 is hard to be deformed by pressure, so that even if a pressure is applied to the surface-reduced workpiece 9 by the elevating device 8 during the surface-reduction, a predetermined distance can be maintained between the electrode 25 and the surface-reduced workpiece 9, thereby preventing a spark during the electrolytic surface-reduction and securing the channel for the electrolyte.

### (3) Flexible abrasive grain unit

FIG. 5 is a part of a sectional view where a plane including a central axis (rotary shaft) and the flexible abrasive grain unit 27 of the rotation surface-reducing head 220, and is a schematic diagram showing a function of the flexible abrasive grain unit 27 when the surface-reduced workpiece 9 is surface-reduced by using the rotation surface-reducing head 220. Specifically, an appearance of the flexible abrasive grain unit 27 deformed by compression by the pressure from the elevating device 8 is shown.

Thus, since the rotation surface-reducing head 220 has the flexible abrasive grain unit 27 in addition to the grindstone 26, it is made possible to perform the electrolytic surface-reduction simultaneously for the convexity and the concavity on the surface of the surface-reduced workpiece 9.

In addition, it is possible to perform the electrolytic surface-reduction by covering the entire bottom of the rotation surface-reducing head 220 of the present invention with nonwoven cloth.

### EXAMPLES

Hereinafter, the present invention will be described more specifically with examples by using a polishing head according to the present invention.

### (Example 1)

Polishing head (electrode + grindstone)

| | |
|---|---|
| Polishing head diameter | 240 mm |

| | |
|---|---|
| Electrode | aluminum alloy |
| Grindstone | elastic grindstone |
| Rotation speed of polishing head | 450 rpm |
| Pressure applied to polishing head | 1 kg/cm² |
| Electrolyte | 30 wt% concentration aqueous solution of sodium nitrate |
| Flow speed of electrolyte | 6 m/sec |
| Current density | 21 A/cm² |

Under the above-mentioned conditions, a commercially available SUS304-made flat bar (cross section size: 6×50 mm, trough: 0.07 mm) (acid pickled surface) was provided with a 1 -pass polishing. Ra (average roughness of center line (µm)), Ry (maximum roughness (µm)) and a trough were measured. Measurement results are as follows:

**Table 1**

| | Ra(µm) | Ry(µm) | Trough |
|---|---|---|---|
| Before polishing | 0.8 | 5.3 | 0.07 |
| After polishing | 0.17 | 1.44 | 0.02 |

In addition, the acid pickled surface visually recognized before polishing could not be recognized on the surface after polishing.

### (Example 2)

Polishing head (electrode + grindstone + flexible abrasive grain unit)

| | |
|---|---|
| Polishing head diameter | 240 mm |
| Electrode | stainless |
| Grindstone | elastic grindstone |
| Flexible abrasive | grain unit |
| | unit with polishing cloth affixed to foam rubber |
| Rotation speed of polishing head | 600 rpm |
| Pressure applied to polishing head | 1 kg/cm² |
| Electrolyte | 30wt% concentration aqueous solution of sodium nitrate |
| Flow speed of electrolyte | 6 m/sec |
| Current density 20 | A/cm² |

Under the above-mentioned conditions, a commercially available SUS304-made square pipe (acid pickled surface) was provided with a 1-pass polishing. Ra (average roughness of center line (µm)) and Ry (maximum roughness (µm)) were measured. Measurement results are as follows:

**Table 2**

| | Ra(µm) | Ry(µm) |
|---|---|---|
| Before polishing | 4.5 | 24.0 |
| After polishing | 0.2 | 1.3 |

In addition, the acid pickled surface visually recognized before polishing could not be recognized on the surface after polishing.

### (Example 3 and comparative example 1)

Example 3 was performed similarly to the above-mentioned example 2.

In the comparative example 1, a SUS304-made square pipe (acid pickled surface) was used as a polished workpiece, and a rough polishing and a final polishing by a grinstone polishing were performed as have been conventionally performed. Specifically, a grindstone for rough polishing having a grain size of #150 was used for the rough polishing, and a grindstone for final polishing having a grain size of #400 was used for the final polishing, and the polishing was performed at a rotation speed of 320 rpm.

For these test examples, a polishing time required for polishing a polished workpiece for 1 m, Ra (average roughness of center line (µm)) and Ry (maximum roughness (µm)) after polishing were measured. In addition, surface troughs after polishing were measured. It is to be noted that before polishing, Ra was 4.5 and Ry was 24.0 for the SUS304-made square pipe (acid pickled surface)

Measurement results are as shown in Table 3.

**Table 3**

| | Polishing time for 1 m | Surface roughness after polishing | |
|---|---|---|---|
| | | Ra(µm) | Ry(µm) |
| Example 3 | 2.6 min | 0.1-0.2 | 1.0-1.7 |
| Comparative example 1 | 27.0 min | 0.04-0.1 | 0.4-1.0 |

Thus, the polishing time of the example 3 using the present invention was extremely shorter than the comparative example 1.

Since the flexible abrasive grain unit of polishing head of the example 3 contacts the concavity and the convexity of the steel product, the entire surface (surface including convexity and concavity) of the polished workpiece is abraded. With the electrolytic-polishing, since the abraded surface is intensively polished, in the example 3, the entire surface of the polished workpiece can be uniformly polished. In addition, since the entire surface including the convexity and the concavity is polished, the surface trough remains after polishing.

On the other hand, in the comparative example 1, since the convexity on the surface of the steel product is intensively polished with the abrasive grains, and it is required to polish and remove the entire convexity in order to polish the entire surface of the steel lumber, it takes an extremely long polishing time.

### INDUSTRIAL APPLICABILITY

The present invention can be used for a surface-reduction of an acid pickled surface, a microscopic surface disordered layer, a welding deformation, and the like on the surface of steel product such as an H-beam, a column, a square pipe, a flat bar, and a steel plate. In addition, it can be used for removing a surface defect on a curved surface.

### EXPLATATIONS OF LETTERS OR NUMERALS

- 210: rotation surface-reducing head for electrolytic abrasive grain surface-reduction
- 220: rotation surface-reducing head for electrolytic abrasive grain surface-reduction
- 21: head base
- 22: rotary shaft
- 23: tubular portion
- 24: liquid reservoir
- 25: electrode
- 26: grindstone
- 27: flexible abrasive grain unit
- 271: elastic body
- 272: surface-reducing cloth
- 4: electrolyte supplying portion
- 5: energizing portion
- 6: insulation coupling
- 7: head rotating motor
- 8: elevating portion
- 9: surface-reduced workpiece

## Claims

1. A rotation surface-reducing head (210, 220) having a head base (21) and a rotary shaft (22), wherein two or more electrodes (25) and grindstones (26) are disposed on a bottom surface of the head base (21), wherein the head base (21) is disk-like, and
the electrodes (25) and the grindstones (26) are disposed in the outer periphery of the bottom surface of the head base (21),
**characterized by** having, in the middle of the bottom surface of the head base (21), a liquid reservoir (24) defined by the electrodes (25), the grindstones (26) and the head base (21),
wherein the electrodes (25) and the grindstones (26) are disposed on the head base (21) so that bottom surfaces of the grindstones (26) project further in a downward direction than the electrodes (25), and
in that the grindstones include elastic grindstones enabling a simultaneous surface reduction of a concavity and a convexity of a non-planar workpiece.

2. The rotation surface-reducing head (210, 220) according to claims 1, **characterized in that** the rotary shaft (22) is tubular and is communicated with the liquid reservoir (24).

3. The rotation surface-reducing head (210, 220) according to claims 1 or 2, **characterized by** being used in an electrolytic abrasive grain surface-reduction.

4. An electrolytic surface-reducing device including:
a rotation surface-reducing head (210, 220) according to any one of claims 1-3;
an electrolyte supplying means (4) supplying an electrolyte to the surface-reducing head (210, 220);
a head rotating motor (7) rotating the surface-reducing head (210, 220); and
a rotation surface-reducing head elevating means (8) for adjusting a height of the rotation surface-reducing head (210, 220) and thereby the applied pressure during a surface-reduction.

5. An electrolytic surface-reducing method using a rotation surface-reducing head (210, 220) for electrolytic abrasive grain surface-reduction having a head base (21) and a rotary shaft (22), wherein two or more electrodes (25) and grindstones (26) are disposed on a bottom surface of the head base (21), **characterized by** performing a surface-reduction by energizing the electrodes (25) while flowing an electrolyte between the electrodes (25) and a surface-reduced workpiece (9), whereby the grindstones (26) include elastic grindstones enabling a simultaneous surface reduction of a concavity and a convexity of a non-planar workpiece.

6. The electrolytic surface-reducing method according to claim 5, wherein a current density of a current flowing between the electrodes (25) and the surface-reduced workpiece (9) is 5-100 A/cm².

7. The electrolytic surface-reducing method according to claim 5 or 6, wherein a velocity of the electrolyte flowing between the electrodes (25) and the surface-reduced workpiece (9) is 5-10 m/sec.

## Patentansprüche

1. Rotationsflächenreduzierkopf (210, 220) mit einer Kopfbasis (21) und einer Drehwelle (22), wobei zwei oder mehr Elektroden (25) und Schleifsteine (26) auf der Unterseite der Kopfbasis (21) angeordnet sind,
wobei die Kopfbasis (21) scheibenförmig ist und
die Elektroden (25) und die Schleifsteine (26) im äußeren Umfang der Unterseite der Kopfbasis (21) angeordnet sind,
**dadurch gekennzeichnet, dass** sich in der Mitte der Unterseite der Kopfbasis (21) ein Flüssigkeitsreservoir (24) befindet, das von den Elektroden (25), den Schleifsteinen (26) und der Kopfbasis (21) definiert wird,
wobei die Elektroden (25) und die Schleifsteine (26) an der Kopfbasis (21) so angeordnet sind, dass die Unterseiten der Schleifsteine (26) weiter in einer nach unten gerichteten Richtung hervorstehen als die Elektroden (25), und
dass die Schleifsteine elastische Schleifsteine umfassen, die eine gleichzeitige Flächenreduktion einer Konkavität und einer Konvexität eines nicht planaren Werkstücks ermöglichen.

2. Rotationsflächenreduzierkopf (210, 220) nach Anspruch 1, **dadurch gekennzeichnet, dass** die Drehwelle (22) rohrförmig ist und mit dem Flüssigkeitsreservoir (24) in Verbindung steht.

3. Rotationsflächenreduzierkopf (210, 220) nach den Ansprüchen 1 oder 2, **dadurch gekennzeichnet, dass** er bei einer elektrolytischen Schleifkörperflächenreduktion verwendet wird.

4. Vorrichtung für die elektrolytische Flächenreduktion, umfassend:
einen Rotationsflächenreduzierkopf (210, 220) nach einem der Ansprüche 1 - 3;
ein Elektrolytzuführmittel (4), das dem Flächenreduzierkopf (210, 220) einen Elektrolyten zuführt;
einen Kopfdrehmotor (7), der den Flächenreduzierkopf (210, 220) dreht; und
ein Rotationsflächenreduzierkopf-Hebemittel (8) zum Einstellen der Höhe des Rotationsflächenreduzierkopfes (210, 220) und dadurch des ausgeübten Drucks während der Flächenreduktion.

5. Elektrolytisches Flächenreduzierverfahren unter Verwendung eines Rotationsflächenreduzierkopfes (210, 220) für die elektrolytische Schleifkörperflächenreduktion, der eine Kopfbasis (21) und eine Drehwelle (22) aufweist, wobei zwei oder mehr Elektroden (25) und Schleifsteine (26) auf der Unterseite der Kopfbasis (21) angeordnet sind,
**dadurch gekennzeichnet, dass** eine Flächenreduktion durchgeführt wird, indem die Elektroden (25) unter Strom gesetzt werden, während sich ein Elektrolyt zwischen den Elektroden (25) und einem flächenreduzierten Werkstück (9) bewegt, wobei die Schleifsteine (26) elastische Schleifsteine umfassen, die eine gleichzeitige Flächenreduktion einer Konkavität und einer Konvexität eines nicht planaren Werkstücks ermöglichen.

6. Elektrolytisches Flächenreduzierverfahren nach Anspruch 5, wobei die Stromdichte eines Stroms, der zwischen den Elektroden (25) und dem flächenreduzierten Werkstück (9) strömt, 5 - 100 A/cm² beträgt.

7. Elektrolytisches Flächenreduzierverfahren nach Anspruch 5 oder 6, wobei die Geschwindigkeit des Elektrolyten, der sich zwischen den Elektroden (25) und dem flächenreduzierten Werkstück (9) bewegt, 5 - 10 m/s beträgt.

## Revendications

1. Tête de réduction de surface de rotation (210, 220) possédant une base de tête (21) et un arbre rotatif (22), dans laquelle deux électrodes ou plus (25) et des meules (26) sont disposées sur une surface inférieure de la base de tête (21),
dans laquelle la base de tête (21) est en forme de disque, et
les électrodes (25) et les meules (26) sont disposées dans la périphérie externe de la surface inférieure de la base de tête (21),
**caractérisée en ce qu'**elle possède, au milieu de la surface inférieure de la base de tête (21), un réservoir à liquide (24) défini par les électrodes (25), les meules (26) et la base de tête (21),
dans laquelle les électrodes (25) et les meules (26) sont disposées sur la base de tête (21) de sorte que les surfaces inférieures des meules (26) font saillie davantage dans une direction vers le bas que les électrodes (25), et
**en ce que** les meules incluent des meules élastiques permettant une réduction de surface simultanée d'une concavité et d'une convexité d'une pièce de travail non plane.

2. Tête de réduction de surface de rotation (210, 220) selon les revendications 1, **caractérisée en ce que** l'arbre rotatif (22) est tubulaire et est en communication avec le réservoir à liquide (24).

3. Tête de réduction de surface de rotation (210, 220) selon les revendications 1 ou 2, **caractérisée en ce qu'**elle est utilisée dans une réduction de surface électrolytique à grain abrasif.

4. Dispositif électrolytique de réduction de surface incluant :
une tête de réduction de surface de rotation (210, 220) selon l'une quelconque des revendications 1 à 3 ;
un moyen d'alimentation en électrolyte (4) alimentant un électrolyte à la tête de réduction de surface (210, 220) ;
un moteur rotatif de tête (7) faisant tourner la tête de réduction de surface (210, 220) ; et
un moyen d'élévation de tête de réduction de surface de rotation (8) destiné à ajuster une hauteur de la tête de réduction de surface de rotation (210, 220) et, de ce fait, la pression appliquée pendant une réduction de surface.

5. Procédé électrolytique de réduction de surface en utilisant une tête de réduction de surface de rotation (210, 220) pour réduction de surface électrolytique à grain abrasif possédant une base de tête (21) et un arbre rotatif (22), dans lequel deux électrodes ou plus (25) et des meules (26) sont disposées sur une surface inférieure de la base de tête (21),
**caractérisé par** l'exécution d'une réduction de surface en mettant sous tension les électrodes (25) tout en faisant s'écouler un électrolyte entre les électrodes (25) et une pièce de travail réduite en surface (9), moyennant quoi les meules (26) incluent des meules élastiques permettant une réduction de surface simultanée d'une concavité et d'une convexité d'une pièce de travail non plane.

6. Procédé électrolytique de réduction de surface selon la revendication 5, dans lequel une densité de courant d'un courant circulant entre les électrodes (25) et la pièce de travail réduite en surface (9) va de 5 à 100 A/cm².

7. Procédé électrolytique de réduction de surface selon la revendication 5 ou 6, dans lequel une vitesse de l'électrolyte s'écoulant entre les électrodes (25) et la pièce de travail réduite en surface (9) va de 5 à 10 m/s.
